# DEMANDE DE BREVET EUROPEEN

(11) **EP 1 162 129 A1**
(43) Date de publication de la demande: **12.12.2001**
(21) Numéro de dépôt: 01401452.6
(22) Date de dépôt: 06.06.2001
(51) Int. Cl.: B62D 39/00

(54) **Nouvelle architecture de véhicule**

(30) Priorité: 07.06.2000 FR 0007293
(71) Demandeur: Matra Automobile, 75016 Paris (FR)
(72) Inventeur: Niehaus Axel, 78370 Plaisir (FR)
(74) Mandataire: David, Alain

(57) **Abrégé**

Véhicule automobile de tourisme particulier ou utilitaire dont le tablier avant (28) est repoussé vers l'avant du véhicule de façon à dégager dans l'habitacle (16), en avant des occupants d'une première ligne de sièges (12), un espace de sécurité entièrement libre de toute occupation, la distance D séparant ce tablier avant d'un plan PP passant par un patin de pédale (40) étant au moins une fois et demi supérieure à la plus grande des courses C des pédales du véhicule de façon à garantir une sécurité passive suffisante aux occupants lors d'un choc frontal. L'ensemble des organes mécaniques (34 à 42), dont le groupe moteur-boîte (34), est disposé avantageusement entièrement sous le plancher (20) du véhicule.

## Description

### Domaine de l'invention

La présente invention concerne un nouveau type de véhicule automobile de tourisme particulier ou utilitaire permettant l'obtention d'une grande habitabilité et d'un bon comportement en cas de crash frontal.

### Art antérieur

Dans la plupart des véhicules automobiles, qu'ils s'agissent de véhicules de tourisme particulier de type berline, break ou encore monospace ou de véhicules utilitaires, on cherche aujourd'hui à concilier une augmentation de la surface habitable, sans pour autant accroître en proportion les dimensions générales des véhicules, avec une augmentation ou au moins un maintien au niveau actuel de la sécurité passive dont bénéficient les occupants de ces véhicules.

Les véhicules les plus couramment utilisés de nos jours sont les véhicules dits « à traction avant » avec un compartiment moteur en avant de l'habitacle, c'est à dire disposé devant le tablier séparateur de l'habitacle du véhicule. Or, lorsque l'on souhaite concilier les impératifs d'habitabilité et de sécurité précités, cette architecture classique présente malheureusement des inconvénients majeurs, notamment pour les occupants du véhicule disposés sur la première ligne de sièges (conducteur et passager(s) avant).

En effet, le moteur étant un élément plus ou moins incompressible, en cas de choc frontal, il va pénétrer dans l'habitacle entraînant avec lui le volant, la planche de bord, le pédalier, ou une autre partie du véhicule et venir directement menacer ces occupants de première ligne, sauf à prévoir dans la partie en avant de l'habitacle (et donc en augmentant la longueur hors tout du véhicule correspondant à la distance entre les boucliers avant et arrière) des zones d'écrasement (dites aussi de compactage) nécessaires pour limiter cette intrusion avec une décélération acceptable pour ces occupants. Car, accepter une décélération plus importante, par exemple en permettant un arrêt du véhicule sur une distance plus courte, c'est prendre alors le risque de blessures accrus avec des lésions cérébrales ou thoraciques pour les occupants. Dans l'un comme dans l'autre cas, il en résulte une diminution notable de la sécurité.

Aussi, afin de maximiser le volume de l'habitacle, certains constructeurs, notamment de véhicules industriels, ont opté pour une installation des différents organes mécaniques, dont le groupe moto-propulseur, sous le plancher de l'habitacle, comme c'est le cas dans les véhicules de transport en commun tels que les bus et autres autocars.

Tous les véhicules de cette catégorie se rapprochent bien sûr de l'optimum du rapport volume habitable/longueur du véhicule, mais ils présentent également tous un défaut majeur au niveau du comportement en cas de crash frontal. En effet, les organes mécaniques ayant été écartés de leurs positions conventionnelles en avant de l'habitacle, ce dernier est alors systématiquement avancé pour se rapprocher du bouclier avant du véhicule, réduisant d'autant la distance entre ce bouclier et les occupants de la première ligne de sièges dont l'intégrité est alors particulièrement menacée du fait de cette exposition. Si, par contre, l'espace réduit restant devant l'habitacle est dimensionné pour absorber à lui seul l'énergie du crash, alors les occupants risquent d'être soumis à une décélération très importante de nature à leur créer des lésions irréversibles.

En outre, le fait de disposer le groupe moto-propulseur sous le plancher conduit nécessairement à une hauteur de plancher élevée de nature à compliquer l'accès au véhicule.

Cette installation des organes mécaniques sous le plancher mise à profit pour avancer les occupants dans ces véhicules de transport en commun, est par contre utilisée dans les véhicules de tourisme à propulsion arrière pour créer un coffre à bagages. Toutefois, on notera que lorsque ce coffre à bagages est rempli d'objets solides, ou plutôt indéformables, il présente un comportement analogue à celui d'un compartiment moteur classique avec une possible intrusion dans l'habitacle en cas de crash frontal, les objets indéformables empêchant alors un écrasement progressif de la structure avant.

En fait, à ce jour, parmi toutes les catégories existantes de véhicules, aucune ne parvient à associer à la fois une habitabilité maximale et un bon comportement en cas de crash frontal. Pour chaque critère, il existe des véhicules offrant des performances optimales, mais ces performances s'obtiennent alors au détriment de l'autre critère et jamais simultanément.

### Objet et définition de l'invention

L'objet de la présente invention est donc de proposer une nouvelle architecture (un nouvel agencement) de véhicule automobile offrant à la fois une maximisation du volume de l'habitacle pour une surface au sol et une longueur du véhicule données et une structure de caisse limitant l'intrusion en crash frontal tout en permettant un arrêt suffisamment doux pour ne pas risquer de blesser les occupants du véhicule à cause d'une décélération trop importante.

Ces buts sont atteints par un véhicule automobile de tourisme ou utilitaire formé autour d'un habitacle délimité à l'avant par une cloison de séparation (tablier avant) et en dessous par un plancher, caractérisé en ce que ledit tablier avant est repoussé vers l'avant du véhicule de façon à dégager dans l'habitacle, en avant des occupants d'une première ligne de sièges, un espace de sécurité entièrement libre de toute occupation, la distance D séparant ledit tablier avant d'un plan PP passant par un patin de pédale étant au moins une fois et demi supérieure à la plus grande des courses C des pédales du véhicule de façon à garantir une sécurité passive suffisante aux occupants lors d'un choc frontal. Cette distance D déterminée est au moins égale à 300 mm et de préférence au moins égale à 350 mm.

Avec cette nouvelle architecture de véhicule, l'habitabilité ainsi que la sécurité sont augmentées de façon notable. Notamment, le risque d'intrusion dans l'habitacle d'éléments incompressibles du véhicule est éliminée.

L'ensemble des organes mécaniques, dont un groupe moteur-boîte de type thermique, électrique ou autre, est avantageusement disposé entièrement sous le plancher du véhicule. Ce plancher est plat et s'étend de l'avant à l'arrière du véhicule.

Les pédales et le volant de direction sont reliés aux organes mécaniques directement au travers dudit plancher plat.

Selon le mode de réalisation envisagé le groupe moteur-boîte peut être disposé sous le plancher à l'avant du véhicule, au centre du véhicule ou bien encore à l'arrière du véhicule. Dans ce dernier cas, le plancher peut être surélévé à l'arrière du véhicule au niveau de son coffre.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en coupe longitudinale d'une architecture de véhicule automobile selon l'invention,
- la figure 2 est une vue de dessus de l'intérieur du véhicule de la figure 1,
- la figure 3 illustre une variante de réalisation de la partie arrière du véhicule de la figure 1, et
- la figure 4 montre une architecture conventionnelle de véhicule automobile selon l'art antérieur.

### Description détaillée d'un mode de réalisation préférentiel

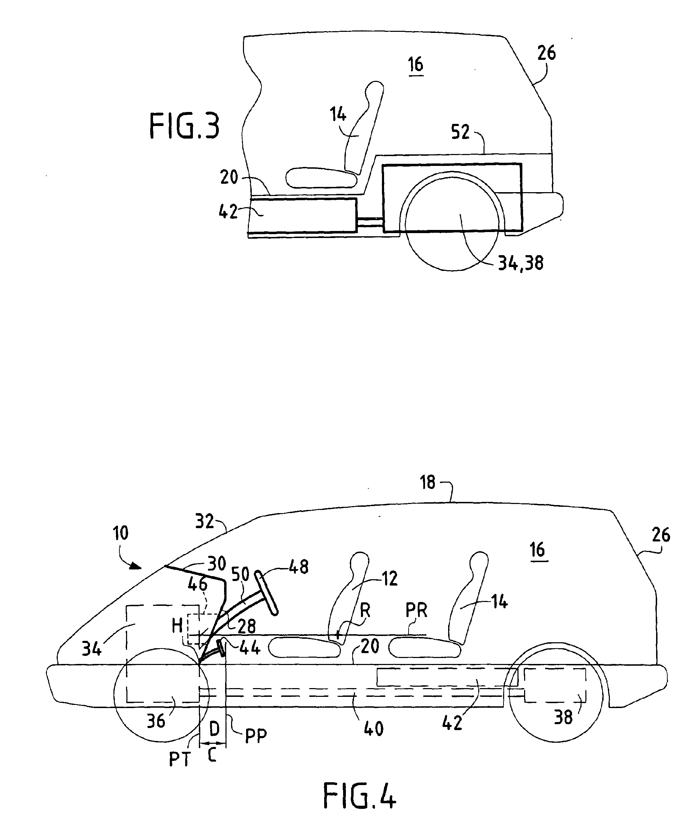

Une architecture conventionnelle de véhicule automobile de tourisme à structure monocorps 10 comportant deux lignes de sièges 12, 14 est illustrée de façon très schématique sur la figure 4. L'habitacle du véhicule 16 qui présente un volume sensiblement parallélépipèdique est délimité au dessus par un plafond 18, au dessous par un plancher 20, sur les cotés par des panneaux 22, 24, en arrière par un hayon 26 et en avant par une cloison de séparation 28 que surmonte une planche de bord 30 qui se prolonge jusqu'à un pare-brise 32 rejoignant le plafond 18. Cette cloison appelée aussi tablier avant assure une séparation entre l'habitacle et le compartiment moteur (dans le cas d'un véhicule à traction avant) comportant un groupe moteur-boîte 34 et un train roulant avant 36 (intégrant classiquement un pont, une suspension et des amortisseurs). Dans le cas d'un véhicule à propulsion amère, ce tablier avant assure la séparation du coffre à bagages de l'habitacle.

Le véhicule comporte également un train roulant arrière 38 qui peut, dans le cas d'un véhicule à quatre roues motrices, être relié au train avant par un arbre de transmission 40. Un réservoir d'essence 42, ou un ensemble de batteries dans le cas d'un véhicule électrique et non plus thermique, est bien entendu également prévu à titre de réserve d'énergie motrice du véhicule. Les autres éléments mécaniques comme l'échappement, les circuits de refroidissement, etc. ou les différents circuits électriques ne sont pas représentés pour ne pas surcharger les dessins mais sont naturellement présents dans le véhicule.

Pour tout véhicule automobile, il est possible de définir un premier plan transversal PP perpendiculaire à l'axe longitudinal du véhicule et passant par le point le plus avancé des pédales (correspondant au patin de pédale 44). De même, à partir de ce plan et en se déplaçant vers l'avant du véhicule entre le plancher 20 et un plan horizontal PR à une hauteur n'excédant pas 250 mm par rapport à celui-ci (et correspondant en général mais pas exclusivement au point de référence de place assise connu sous le nom de point R), il est possible de relever un point H comme le point le plus reculé de l'habitacle appartenant à une ligne L de plus grande longueur possible (de préférence toute la largeur du véhicule) et de définir alors un second plan transversal PT passant par ce point H en incluant la ligne L et parallèle au plan PP (et donc également perpendiculaire à l'axe central longitudinal du véhicule). Dans le cas particulier de la figure 4, ce point H correspond à la zone de liaison entre le plancher 20 et le tablier avant du véhicule 28. La référence à la ligne de plus grande longueur permet de faire abstraction d'éventuels espaces de rangement intérieurs intégrés dans le tablier, telle que la boite à gants 46 dont la profondeur pourrait excéder celle du point H.

Soit maintenant D la distance orthogonale entre les plans PT et PP. Cette distance qui caractérise en quelque sorte l'espace habitable derrière les patins de pédales (en se dirigeant vers l'avant du véhicule) est relativement faible et quasi identique sur tous les types de véhicules automobiles, qu'il s'agisse de véhicules particuliers ou utilitaires ou qu'il s'agisse même de véhicules de transport en commun. En effet, elle correspond en général sensiblement à la plus grande des courses C de ces pédales, soit environ 200 mm.

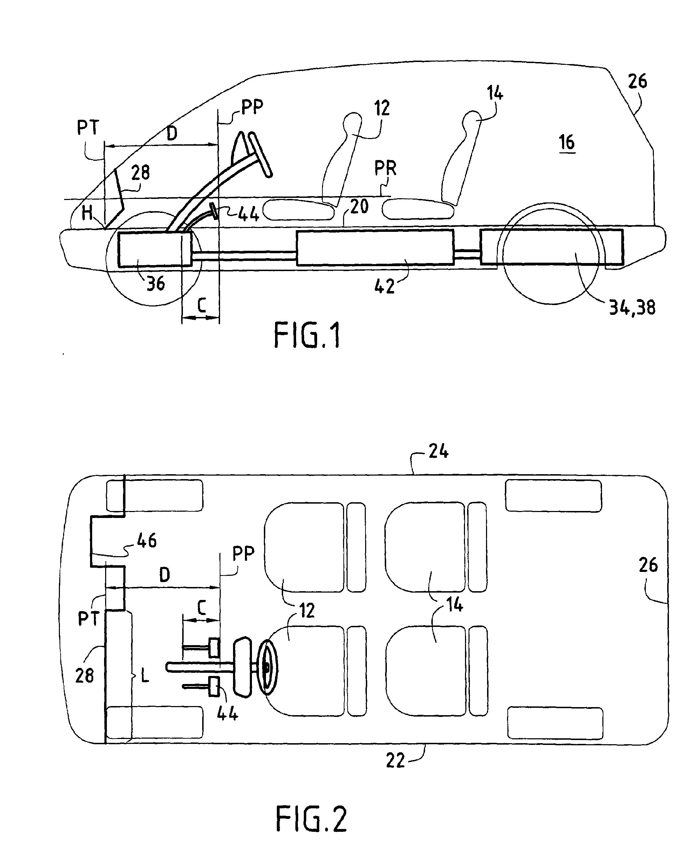

Les figures 1 et 2 illustrent de façon schématique la nouvelle architecture de véhicule que propose l'invention. Tout d'abord, l'ensemble des organes mécaniques (moteur, boîte de vitesses, réservoir d'essence, suspensions, échappement, etc.) est disposé dans la partie inférieure du véhicule, en dessous du plancher 20, ce qui permet à l'habitacle 16 de couvrir la quasi-totalité de la longueur hors tout du véhicule, de l'avant à l'arrière du véhicule comme sur un autobus. Mais ensuite, contrairement à ce type de véhicule de transport en commun, le conducteur et le ou les passagers avant du véhicule occupant la première ligne de sièges 12 sont placés suffisamment loin derrière le bouclier avant (ou le pare-chocs avant) à une distance suffisante pour permettre un bon comportement en cas de crash frontal. A niveau de sécurité comparable, cette distance est toutefois plus faible que sur un véhicule de tourisme particulier et ceci grâce à l'absence d'éléments incompressibles comme le groupe moto-propulseur.

Si l'on se réfère aux paramètres définis précédemment, avec la nouvelle architecture de véhicule selon l'invention, le point H le plus reculé de l'habitacle se trouve très en avant, pratiquement au niveau du bouclier, et la distance D est alors notablement plus importante (au moins de l'ordre de 300 mm et de préférence au moins de l'ordre de 350 mm) que celle existante sur un véhicule traditionnel qui, comme évoqué précédemment, est définie par la seule course des pédales et représente donc environ 200 mm. La distance supplémentaire de l'ordre de 100 mm, avantageusement 150 mm, qui apparaît donc en sus de cette course C et permet le dégagement d'un espace nouveau dans l'habitacle, est l'élément essentiel qui caractérise les véhicules selon l'invention par rapport aux véhicules actuels.

Avec cet agencement particulier, l'avant de l'habitacle est considéré comme une zone de sécurité qui ne doit pas menacer les occupants et qui sera dimensionnée en fonction des critères de sécurité retenus et du niveau de sophistication accepté pour les systèmes de retenue (ceinture de sécurité, coussin gonflable de sécurité, etc.) de ces occupants. Toute la partie supérieure du véhicule (c'est à dire au dessus du plancher 20) est ainsi maintenant entièrement dédiée à l'habitacle, mais les occupants de la première ligne de sièges 12 sont positionnés à une distance sûre de l'avant du véhicule garantissant ainsi en cas de choc frontal une parfaite intégrité de l'habitacle au niveau du conducteur.

De préférence, le volant de direction 48 (par l'intermédiaire d'une colonne de direction 50 intégrant les voyants et compteurs habituellement disposés sur le tableau de bord) et les pédales sont reliés directement aux organes mécaniques à travers le plancher 20. Ces organes mécaniques 34, 36, 38, 40, 42 placés sous le plancher 20 du véhicule sont disposés de manière à reculer en cas de choc frontal évitant ainsi l'intrusion de ces éléments non ou peu compactables dans l'habitacle 16. La réduction de la zone de sécurité se fera avec un temps d'inertie dû au compactage et au recul de ces organes mécaniques disposés à l'avant du véhicule sous le plancher. La violence de la décélération s'en trouvera donc amoindrie au bénéfice des passagers.

Selon la configuration d'implantation choisie pour les organes mécaniques, l'accès des occupants au véhicule peut être plus ou moins aisé. Dans le cas d'un groupe moteur-boîte de vitesses d'une hauteur vraiment faible, les trois implantations possibles pour ce groupe, devant, au milieu, et derrière sont plus ou moins équivalentes. Par contre, si ce groupe moteur-boîte est d'une hauteur conventionnelle, il est plus intéressant de retenir une implantation sous le plancher au niveau de l'arrière du véhicule comme l'illustre la figure 3. En effet, dans ce cas, le plancher du coffre 52 sera surélevé, mais le plancher en partie centrale 20 pourra être maintenu à un niveau plus bas pour faciliter l'accès au véhicule (la hauteur à l'arrière peut être facilement découplée de la hauteur en partie centrale). De plus, avec une motorisation en propulsion, l'installation du moteur à l'arrière n'est pas critiquable d'un point de vue mécanique.

La zone de sécurité supplémentaire dégagée à l'avant du véhicule (sur une distance D moins C) est de dimensions importantes et peut paraître inutile au premier abord. C'est sans doute pourquoi aucun constructeur automobile n'a pour l'instant laissé cette zone intacte, préférant soit avancer les occupants soit y aménager des zones de servitudes ou de coffres, ces deux alternatives étant toutefois potentiellement dangereuses en cas de crash frontal comme expliqué en préambule de la présente demande. En fait, il n'en est rien, le dégagement de la zone de sécurité, qui fait partie maintenant de l'habitacle, offre en effet deux avantages fondamentaux. D'une part, même si la partie avant de l'habitacle n'est pas utilisée pour y installer les occupants du véhicule, elle contribue néanmoins à augmenter réellement le volume de l'habitacle tout en donnant une impression d'espace. D'autre part, si la zone de sécurité est potentiellement inutilisable comme volume de rangement côté conducteur (sans recréer un risque en cas de choc frontal), il n'en est pas de même côté passager. En effet, quand le véhicule est utilisé sans passager à l'avant, tout le volume de la zone de choc devient disponible comme rangement supplémentaire, sans poser le moindre souci en matière de sécurité (voir la figure 2).

En conclusion, un agencement du véhicule où toute la partie supérieure est dédiée à l'habitacle, où la partie avant de l'habitacle correspondant à au moins une fois et demi la plus grande des courses C des pédales du véhicule est laissée libre comme une zone d'intrusion en cas de crash frontal et où les organes mécaniques sont logés sous le plancher, à l'arrière pour ceux qui sont les plus hauts (par exemple le moteur), permet d'obtenir, pour une longueur de véhicule donnée, une réponse aux problèmes d'habitabilité et de sécurité définis en préambule tout en assurant un bon fonctionnement mécanique et un accès aisé au véhicule pour ses occupants.

Bien entendu, si la présente invention a été décrite en regard d'un véhicule de type monocorps à deux rangées de sièges, il est clair qu'elle trouve application aussi bien à des véhicules utilitaires comportant une seule rangée de sièges qu'à des véhicules munis de plus de deux rangées de sièges. De même, son application à des véhicules autres que des véhicules thermiques ou électriques est parfaitement envisageable, comme par exemple des véhicules à motorisation mixte, à gaz, à hydrogène, ou encore à pile à combustible, etc.

## Revendications

1. Véhicule automobile de tourisme particulier ou utilitaire formé autour d'un habitacle (16) délimité à l'avant par une cloison de séparation (tablier avant 28) et en dessous par un plancher (20), **caractérisé en ce que** ledit tablier avant est repoussé vers l'avant du véhicule de façon à dégager dans l'habitacle, en avant des occupants d'une première ligne de sièges (12), un espace de sécurité entièrement libre de toute occupation, la distance D séparant ledit tablier avant d'un plan PP passant par un patin de pédale (40) étant au moins une fois et demi supérieure à la plus grande des courses C des pédales du véhicule de façon à garantir une sécurité passive suffisante aux occupants lors d'un choc frontal.

2. Véhicule selon la revendication 1, **caractérisé en ce que** ladite distance D déterminée est au moins égale à 300 mm.

3. Véhicule selon la revendication 2, **caractérisé en ce que** ladite distance D déterminée est au moins égale à 350 mm.

4. Véhicule selon la revendication 1, **caractérisé en ce qu'**il comporte en outre un ensemble d'organes mécaniques (34 à 42), dont un groupe moteur-boîte (34), disposé entièrement sous le plancher du véhicule.

5. Véhicule selon la revendication 4, **caractérisé en ce que** ledit plancher est plat et s'étend de l'avant (28) à l'arrière (26) du véhicule.

6. Véhicule selon la revendication 4 et la revendication 5, **caractérisé en ce que** lesdites pédales et le volant de direction sont reliés aux organes mécaniques directement au travers dudit plancher plat.

7. Véhicule selon la revendication 4, **caractérisé en ce que** ledit groupe moteur-boîte est disposé sous le plancher (20) à l'avant du véhicule.

8. Véhicule selon la revendication 4, **caractérisé en ce que** ledit groupe moteur-boîte est disposé sous le plancher (20) au centre du véhicule.

9. Véhicule selon la revendication 4, **caractérisé en ce que** ledit groupe moteur-boîte est disposé sous le plancher (20) à l'arrière du véhicule.

10. Véhicule selon la revendication 9, **caractérisé en ce que** ledit plancher (46) est surélévé à l'arrière du véhicule au niveau de son coffre.
